# EUROPÄISCHE PATENTSCHRIFT

(11) **EP 3 507 540 B1**
(45) Veröffentlichungstag und Bekanntmachung des Hinweises auf die Patenterteilung: **04.08.2021**
(21) Anmeldenummer: 17758088.3
(22) Anmeldetag: 11.08.2017
(51) Int. Cl.: F16M 13/02, F21V 21/04

(54) **INSTALLATIONSGERÄT FÜR DIE DECKENMONTAGE**
INSTALLATION DEVICE FOR MOUNTING IN A CEILING
APPAREIL D'INSTALLATION POUR LA POSE AU PLAFOND

(30) Priorität: 01.09.2016 DE 102016116363
(43) Veröffentlichungstag der Anmeldung: 10.07.2019
(73) Patentinhaber: ABB AG, 68309 Mannheim (DE)
(72) Erfinder: WAIBEL, Florian, 44799 Bochum (DE); WIESE, Michael, 42897 Remscheid (DE); LISSON, Werner, 58093 Hagen (DE); EWERS, Manfred, 58239 Schwerte (DE)
(86) Internationale Anmeldenummer: PCT/EP2017/070514
(87) Internationale Veröffentlichungsnummer: WO 2018/041610

(56) Entgegenhaltungen:
- EP-A1- 1 813 861
- WO-A1-2013/083300
- WO-A1-2016/089999
- JP-A- 2006 222 610

## Beschreibung

Die Erfindung betrifft ein Installationsgerät für die Deckenmontage gemäß Anspruch 1.

In der Gebäudeinstallationstechnik gibt es verschiedene Installationsgeräte wie z.B. Bewegungsmelder, Rauchmelder und Lichtquellen etc., die an der Decke eines Raumes montiert werden. Im Falle von Raumdecken, die typischerweise durch Montieren von Werkstoffplatten, wie beispielsweise Gipskartonplatten, unterhalb einer tragenden Gebäudedecke aus z.B. Beton erstellt werden, befindet sich jenseits der Raumdecke, die nachfolgend als Decke bezeichnet wird, ein hohler Innenraum oder Zwischenraum. Zur Montage wird ein solches Installationsgerät mit seinem einen Ende durch eine Öffnung in der Werkstoffplatte in den Zwischenraum hineingeschoben, bis ein am Installations-gerät geformter flanschartiger Gehäuseabschnitt bündig an der Unterseite der Decke anliegt und der von außen sichtbare Teil des Installationsgerätes sich im Außenraum der Decke befindet.

Die EP1813861A1 zeigt eine Anordnung zur Befestigung von Beleuchtungskörpern in Zwischendecken mit einem Körper, der eine oder mehrere Leuchten trägt. Diese Anordnung offenbart nicht, dass sie als ein Bewegungs- oder Rauchmelder ausgeführt ist. Darüber hinaus weist diese Anordnung keine federbelastete Spreizarme auf. Aus der WO 2013/083300A1 ist eine Befestigungsvorrichtung mit einem Tragrahmen für ein Beleuchtungselement bekannt.

Aus dem Stand der Technik ist es weiterhin bekannt, dass Installationsgeräte mit Hilfe von federbelasteten Spreizarmen selbstständig an der Decke halten. Die Arme werden bei der Installation des Installationsgeräts in radialer Richtung zusammengedrückt, damit das Installationsgerät durch die vorbereitete Öffnung in der Werkstoffplatte geschoben werden kann. Nachdem der rückwärtige Teil des Installationsgeräts durch die Öffnung geschoben und die flanschartige Erweiterung an der Unterseite der Decke anliegt, spreizen sich die federbelasteten Spreizarme im Hohlraum wieder in radialer Richtung auf und kehren in Richtung ihres Ursprungszustands zurück. Durch die Dicke des plattenförmigen Werkstoffs der Decke werden die Arme daran gehindert, vollständig in ihren Ursprungszustand zurückzukehren, so dass das Installationsgerät durch die auf der Rückseite der Decke anliegenden federbelasteten Arme an der Decke gehalten wird.

Die meisten Installationsgeräte für die Deckenmontage werden jedoch mit Leitungsgut wie beispielsweise elektrischen Stromzuleitungen verbunden, welche eine gewisse Steifigkeit aufweisen. Je nach Dicke, Anzahl und Flexibilität der Leitungen üben diese bei der Montage der Installationsgeräte in einer vorbereiteten Öffnung in der Decke eine Kraft aus, die mitunter größer als die von den Federn erzeugte Haltekraft ist. Hierdurch besteht die Gefahr, dass das Installationsgerät durch die von den Leitungen erzeugte Kraftwirkung aus der Öffnung in der Decke heraus gedrückt wird und der flanschartige Gehäuseabschnitt des Installationsgerätes nicht mehr bündig an der Unterseite der Decke, bzw. der Werkstoffplatte anliegt.

Demgemäß liegt der Erfindung die Aufgabe zugrunde, ein Installationsgerät zu schaffen, welches mit geringem Aufwand in einer vorbereiteten Öffnung einer aus plattenförmigen Werkstoff gebildeten Decke eines Gebäudes montiert werden kann und welches auch beim Anschluss von steifen Zuleitungen stets eine bündige Anlage des Installationsgerätes an der Unterseite der Decke ermöglicht.

Diese Aufgabe wird erfindungsgemäß durch ein Installationsgerät mit den Merkmalen von Anspruch 1 gelöst.

Gemäß der Erfindung umfasst ein Installationsgerät zur Montage in einer vorzugsweise kreisrunden Öffnung einer Decke, die aus einem plattenförmigen Werkstoff, wie z.B. Holz oder Gipskartonplatten gebildet ist, ein Gehäuse, welches einen ersten Gehäuseabschnitt aufweist, der einen geringeren Durchmesser als die Öffnung besitzt, so dass dieser Gehäuseabschnitt mit einem gewissen Spiel von beispielsweise 5mm in die Öffnung eingeschoben werden kann. Am Gehäuse ist weiterhin ein zweiter flanschartiger Gehäuseabschnitt geformt, der einen gegenüber der Öffnung erweiterten Durchmesser aufweist, und der nach dem Einschieben des ersten Gehäuseabschnitts bündig an der Unterseite der Decke anliegt, wenn der erste Gehäuseabschnitt vollständig in die Öffnung eingeschoben ist. Im Bereich des ersten Gehäuseabschnitts sind zwei diametral gegenüberliegende Spreizarme verschwenkbar aufgenommen, die durch federelastische Mittel aus einer radial innenliegenden Einführposition in eine radial erweiterte Spreizposition gedrängt werden. Die Spreizarme sind vorzugsweise aus Federstahldraht gefertigte Drahtbügel, an denen die federelastischen Mittel bevorzugt als an den Spreizarmen geformte spiralfederartige Abschnitte ausgeführt sind.

Die Erfindung zeichnet sich dadurch aus, dass am ersten Gehäuseabschnitt zusätzlich wenigstens ein Krallenelement mit einer in diesem geformten exzentrischen Gewindebohrung aufgenommen ist, welches durch Rotieren einer in die Gewindebohrung eingreifenden Schraube in einer ersten Drehrichtung in axialer Richtung auf den flanschartigen Gehäuseabschnitt zu aus einer Einführposition in eine Klemmposition bewegbar ist. Die Schraube erstreckt sich dabei durch eine im Gehäuse geformte Bohrung hindurch, in der diese radial geführt wird. Zusätzlich kann die Schraube im Bereich ihres freien Endes auch in einer weiteren Bohrung im zweiten Gehäuseabschnitt geführt sein, wobei am freien Ende der Schraube Sicherungsmittel, wie beispielsweise eine aufgepresste Scheibe oder eine axiale Sicherung mit einem Dom an der Linse, vorgesehen sein können, welche die Schraube in axialer Richtung fixieren und dadurch ein Herausschieben derselben verhindern.

Das Krallenelement besitzt bevorzugt eine flügelartige, insbesondere langgestreckte rechteckige oder ovale Form und weist aufgrund der exzentrischen Anordnung der Gewindebohrung einen längeren Teilabschnitt, welcher in der Klemmposition an der Rückseite der Decke anliegt und einen kürzeren Teilabschnitt auf. Der kürzere Teilabschnitt befindet sich in der Einführposition radial innerhalb des Durchmessers der Öffnung. Hierdurch wird es ermöglicht, dass der erste Gehäuseabschnitt zum einen frei in die Öffnung eingeschoben werden kann, wenn der längere Teilabschnitt sich in der Einführposition des Installationsgerätes radial innerhalb des Durchmesser der Öffnung befindet und der längere Teilabschnitt danach durch Rotieren der Schraube in die erste Drehrichtung über die Rückseite der Decke verschwenkt werden kann.

Durch die Erfindung ergibt sich der Vorteil, dass das Installationsgerät nach dem Anschließen der Stromzuleitungen, die hierzu aus der Öffnung herausgezogen werden, durch Zusammendrücken der Spreizarme mit einer Hand in die Öffnung eingeschoben werden kann, bis der flanschartige zweite Gehäuseabschnitt bündig an der Unterseite der Decke anliegt. In dieser Position kann dann mit einem Schraubenzieher die Schraube solange in der ersten Drehrichtung (vorzugsweise im Uhrzeigersinn) gedreht werden, bis sich das Krallenelement gegen die Rückseite des plattenförmigen Materials der Decke bewegt hat und an dieser anliegt. Hierdurch wird das plattenförmige Material zwischen dem Krallenelement und dem zweiten flanschartigen Gehäuseabschnitt geklemmt und das Installationsgerät mit einer hohen Haltekraft an der Decke fixiert.

Bei der bevorzugten Ausführungsform der Erfindung ist am ersten Gehäuseabschnitt ein erster seitlicher Anschlag geformt, der sich in axialer Richtung des Gehäuses parallel zur Schraube erstreckt und an dem das Krallenelement anliegt und entlang gleitet, während dieses durch Rotieren der Schraube in der ersten Drehrichtung auf den flanschartigen Gehäuseabschnitt zu bewegt wird.

Nach einem weiteren der Erfindung zugrunde liegenden Gedanken ist am ersten Gehäuseabschnitt ein zweiter seitlicher Anschlag geformt, an welchem das Krallenelement, bzw. genau genommen der längere Teilabschnitt desselben, anschlägt, während dieses durch Rotieren der Schraube in der umgekehrten Drehrichtung (vorzugsweise entgegengesetzt zum Uhrzeigersinn) vom flanschartigen Gehäuseabschnitt weg bewegt wird. Durch das Zusammenspiel der beiden seitlichen Anschläge, die vorzugsweise als parallel zueinander verlaufende Rippen am ersten Gehäuseabschnitt ausgeführt sind, ergibt sich der Vorteil, dass sich das Krallenelement mit einfachsten konstruktiven Mitteln allein durch Rotieren der Schraube in der ersten oder zweiten Drehrichtung in die Schließrichtung oder Öffnungsrichtung bewegen lässt, um das Installationsgerät zuverlässig an der Decke zu fixieren oder zu lösen.

Bei der bevorzugten Ausführungsform der Erfindung weist der zweite seitliche Anschlag an seinem dem flanschartigen Gehäuseabschnitt gegenüberliegenden Ende eine Ausnehmung auf, in welche das Krallenelement, bzw. genauer gesagt dessen längerer Teilabschnitt, der in der Klemmposition radial über den Durchmesser der Öffnung hinaussteht und über der Rückseite der Decke angeordnet ist, hinein schwenken kann, wenn das Krallenelement durch Rotieren der Schraube in der zweiten Drehrichtung seine Einführposition erreicht. Hierdurch ergibt sich der Vorteil, dass das Krallenelement beim Erreichen der Ausnehmung aufgrund der unvermeidbaren Reibung zwischen dem Innengewinde der Gewindebohrung und dem Außengewinde der Schraube sozusagen automatisch in die Ausnehmung hineinschwenkt und dadurch die Bewegungsbahn für den ersten Gehäuseabschnitt freigibt, so dass dieser aus der Öffnung heraus gezogen werden kann.

Bei der bevorzugten Ausführungsform der Erfindung ist in der Ausnehmung ein radialer Anschlag geformt, welcher beim Drehen der Schraube in der zweiten Drehrichtung eine Weiterdrehung des Krallenelements verhindert, wenn dieses, bzw. der längere Teilabschnitt desselben, vollständig in die Ausnehmung hineingeschwenkt ist. Hierdurch ergibt sich der Vorteil, dass das Krallenelement durch Weiterdrehen der Schraube in der zweiten Drehrichtung gegen einen oberen Anschlag bewegt und gegenüber diesem verspannt werden kann, welcher die axiale Bewegung des Krallenelements in der Einführposition begrenzt, um ein zufälliges Herausschwenken des Krallenelements während des Einführens und Herausziehens des ersten Gehäuseabschnitts in die Öffnung zu verhindern.

Nach einem weiteren der Erfindung zugrunde liegenden Gedanken kann der zweite Anschlag eine im Bereich der Ausnehmung entspringende Schräge aufweisen, entlang welcher sich das Krallenelement, bzw. der längere Teilabschnitt desselben nach dem Verlassen der Einführposition bewegt, wenn die Schraube in der ersten Drehrichtung rotiert wird. Hierdurch wird eine kontinuierliche Schwenkbewegung des Krallenelements beim Herausfahren aus der Einführposition, bzw. beim Hineinfahren in die Einführposition erhalten, welche sicherstellt, dass das Krallenelement auch im Falle eines größeren axialen Spiels zuverlässig in die Ausnehmung eingefahren werden kann und nicht verklemmt.

Bei der bevorzugten Ausführungsform der Erfindung ist am ersten Gehäuseabschnitt ein weiteres, spiegelbildlich zum ersten Krallenelement ausgebildetes Krallenelement mit einer in diesem geformten exzentrischen Gewindebohrung vorgesehen, welches durch Rotieren einer in die Gewindebohrung eingreifenden weiteren Schraube in einer ersten Drehrichtung in axialer Richtung aus einer Einführposition auf den flanschartigen Gehäuseabschnitt zu in eine Klemmposition bewegbar ist. Hierbei erstrecken sich die Schraube und die weitere Schraube parallel zueinander in einer durch das Zentrum des ersten Gehäuseabschnitts verlaufenden gedachten Verbindungsebene; und die Krallenelemente sind in der Einführposition auf einander gegenüberliegenden Seiten der gedachten Verbindungsebene spiegelbildlich versetzt zueinander angeordnet.

In gleicher Weise, wie zuvor im Zusammenhang mit dem ersten Krallenelement beschrieben, wird die Drehbewegung des weiteren Krallenelements vorzugsweise durch einen ersten und zweiten weiteren seitlichen Anschlag sowie einen weiteren oberen Anschlag begrenzt, wobei der zweite seitliche Anschlag über eine weitere Schräge in eine weitere Ausnehmung übergeht, welche im ersten Gehäuseabschnitt geformt ist, und in welcher der längere Teilabschnitt des weiteren Krallenelements einfahrbar ist, um dieses aus dem Bereich der Öffnung heraus zu bewegen.

Die Erfindung wird nachfolgend mit Bezug auf die Zeichnungen anhand einer bevorzugten Ausführungsform beschrieben.

In den Zeichnungen zeigen
- Fig. 1: eine schematische Explosionsdarstellung eines erfindungsgemäßen Installationsgerätes,
- Fig. 2: eine schematische Querschnittsansicht des Installationsgerätes im eingebauten Zustand, bei welchem sich die Krallenelement in der Klemmposition befinden,
- Fig. 3: eine schematische seitliche Aufsicht auf das Installationsgerät, bei welchem sich die Krallenelemente in der Einführposition befinden,
- Fig. 4: eine Aufsicht auf das Installationsgerät mit aufgesetzter Abdeckkappe und Blendrahmen,
- Fig. 5: eine Seitenansicht des Installationsgerätes mit aufgesetzter Abdeckkappe und Blendrahmen, und
- Fig. 6: eine schematische Darstellung des in der Öffnung vormontierten Installationsgeräts, bei welchem sich die Krallenelemente in der Einführposition befinden und das Gehäuse allein durch die Spreizarme an der Deckenplatte gehalten wird.

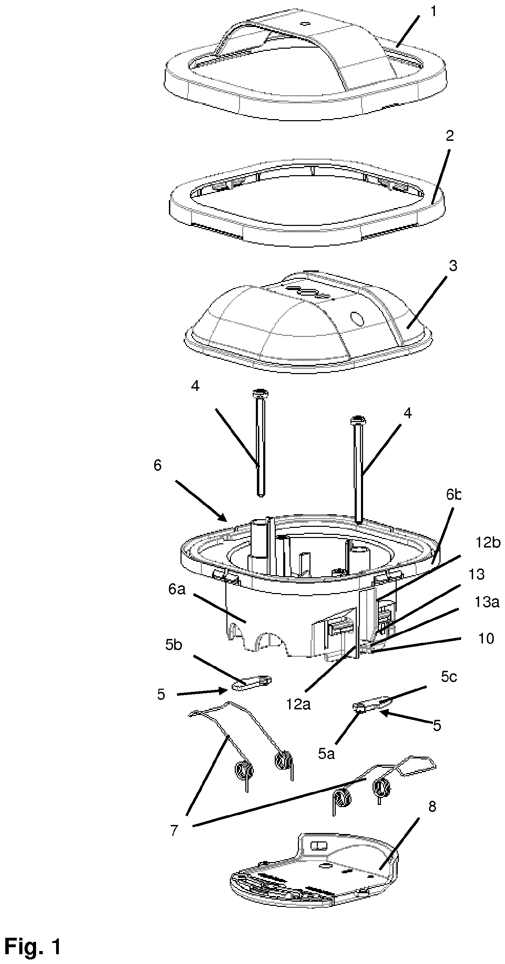

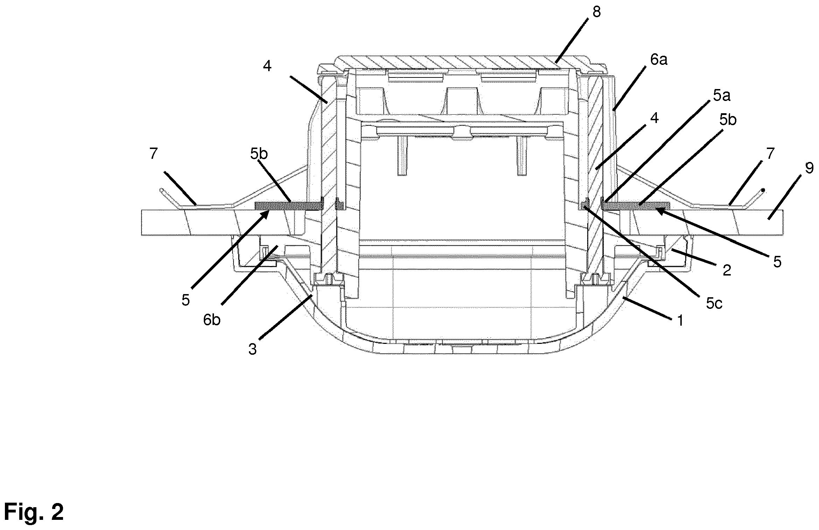

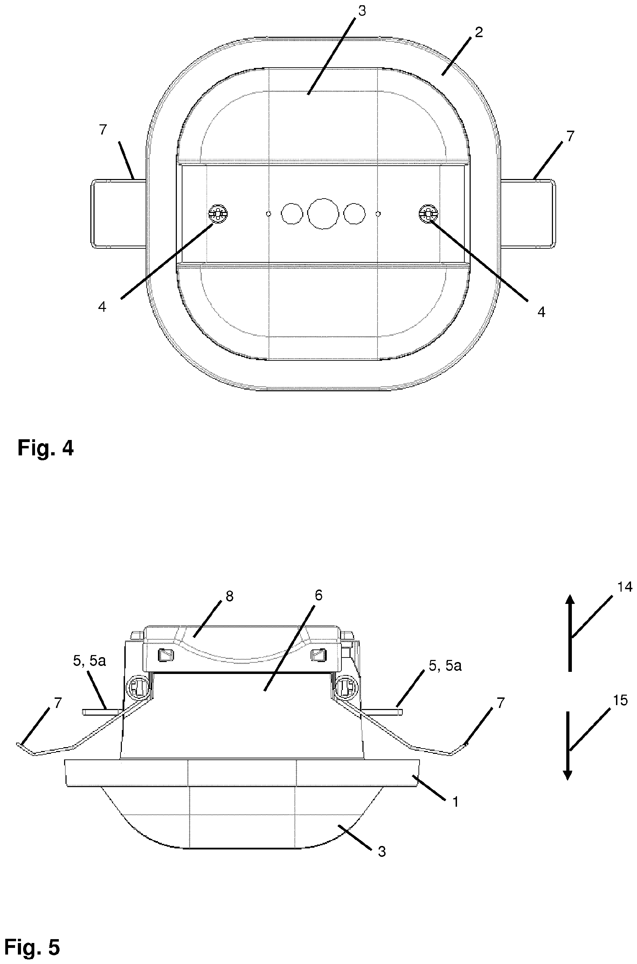

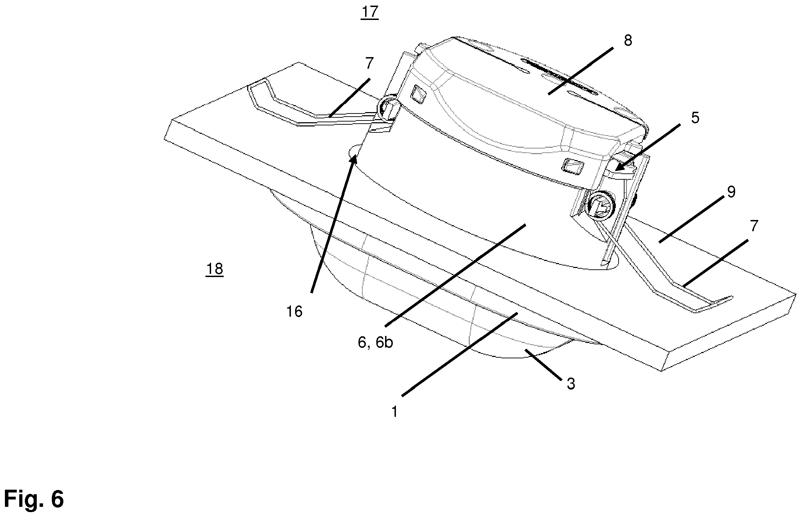

Wie in den Figuren 1 bis 6 gezeigt ist, umfasst ein Installationsgerät zur Montage in einer nur ausschnittsweise gezeigten Öffnung 16 einer Decke 9, die aus einem plattenförmigen Werkstoff, wie z.B. Holz oder Gipskartonplatten gebildet ist und einen Innenraum 17 sowie einen Außenraum 18 aufweist, ein Gehäuse 6, welches einen ersten Gehäuseabschnitt 6a aufweist. Der erste Gehäuseabschnitt 6a besitzt einen geringeren Durchmesser als die Öffnung 16. Am Gehäuse 6 ist weiterhin ein zweiter flanschartiger Gehäuseabschnitt 6b geformt, der einen gegenüber der Öffnung 16 erweiterten Durchesser aufweist, und der nach dem Einschieben des ersten Gehäuseabschnitts 6a bündig an der Unterseite der Decke 9 anliegt, wenn der erste Gehäuseabschnitt 6a - wie in Fig. 2 gezeigt - vollständig in die Öffnung eingeschoben ist. Im Bereich des ersten Gehäuseabschnitts 6a sind zwei diametral gegenüberliegende Spreizarme 7 verschwenkbar befestigt, die durch federelastische Mittel in Form der nicht näher bezeichneten Spiralfeder aus einer radial innenliegenden Einführposition in eine in Fig. 5 gezeigte radial erweiterte Spreizposition gedrängt werden.

Wie aus der Explosionsdarstellung der Figur 1 entnommen werden kann, werden auf den zweiten flanschartigen Gehäuseabschnitt 6b nacheinander eine beispielsweise als Linse oder Streuscheibe ausgestaltete, den Innenraum des Gehäuses 6 abdeckende Abdeckkappe, ein auf diese aufgesetztes Befestigungselement 2 in Form eines umlaufenden Rahmens sowie vorzugsweise noch ein die Abdeckkappe und das Befestigungselement überspannendes Designelement 1 aufgesetzt, wobei die konkrete Ausführung der zuletzt genannten Bauteile lediglich beispielhaft ist und in Abhängigkeit von der Funktion des Installationsgerätes auch anders gewählt sein kann. Auf den ersten Gehäuseabschnitt 6a kann weiterhin noch eine Zugentlastung 8 für die elektrischen Zuleitungen aufgesetzt werden, welche in den Figuren ebenfalls schematisch angedeutet ist. Die konkrete Ausführung ist beispielhaft und kann in Abhängigkeit von der Funktion des Installationsgerätes auch anders gewählt sein.

Am ersten Gehäuseabschnitt 6a ist weiterhin erfindungsgemäß ein in Fig. 1 und 2 näher gezeigtes Krallenelement 5 aufgenommen, in welchem eine exzentrische Gewindebohrung 5a geformt ist, in die der Außengewindeabschnitt einer Schraube 4 eingreift, die in einer im Gehäuse 5 geformten, nicht näher bezeichneten Bohrung rotierbar aufgenommen ist.

Das Krallenelement 5 besitzt eine in Fig. 1 angedeutete, bevorzugt flügelartige, Form und weist aufgrund der exzentrischen Anordnung der Gewindebohrung 5a einen längeren Teilabschnitt 5b, welcher in der Klemmposition an der Rückseite der Decke 9 anliegt und einen kürzeren Teilabschnitt 5c auf, welcher sich in der Einführposition radial innerhalb des Durchmessers der Öffnung 16 befindet. Hierdurch wird es ermöglicht, dass der erste Gehäuseabschnitt 6a frei in die Öffnung 16 eingeschoben werden kann, wenn der längere Teilabschnitt 5b sich radial innerhalb des Durchmessers der Öffnung befindet und der längere Teilabschnitt 5b im Anschluss daran durch Rotieren der Schraube 4 im Uhrzeigersinn über den Rand der Öffnung 16 hinaus in den Bereich der Rückseite der Decke 9 in die Klemmposition verschwenkt werden kann, wie dies in Fig. 2 angedeutet ist.

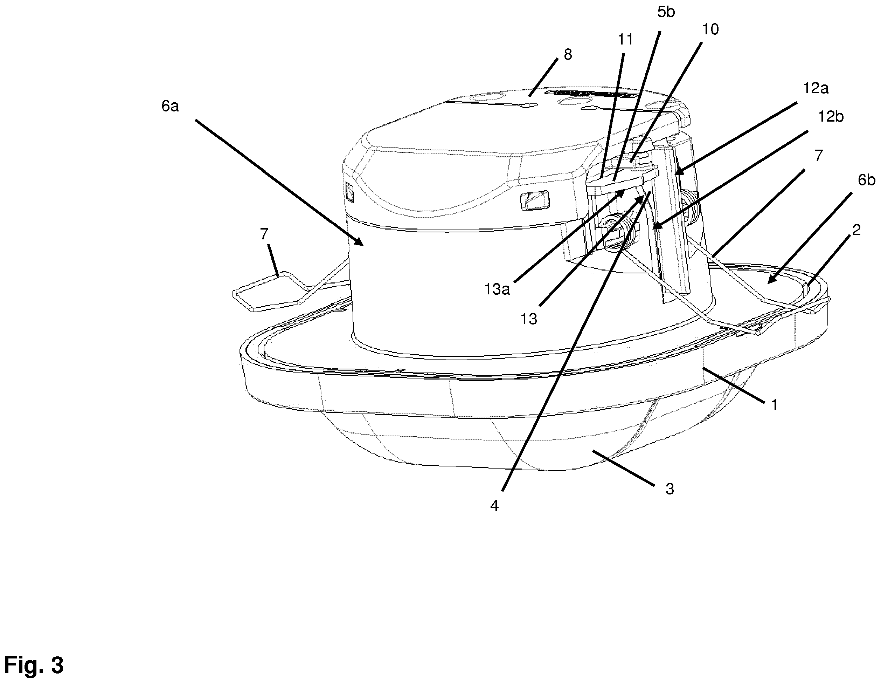

Wie sich anhand der Darstellung der Fig. 3 weiterhin erkennen lässt, ist am ersten Gehäuseabschnitt 6a ein erster seitlicher Anschlag 12a geformt, der sich parallel zur Schraube 4 erstreckt und an dem der längere Teilabschnitt 5b des Krallenelements 5 anliegt und entlang gleitet, während dieses durch Rotieren der Schraube 4 in der ersten Drehrichtung in der Schließrichtung 15 auf den flanschartigen Gehäuseabschnitt 6b zu bewegt wird. Dem ersten seitlichen Anschlag 12a gegenüberliegend ist am ersten Gehäuseabschnitt 6a weiterhin ein zweiter seitlicher Anschlag 12b geformt, an welchem das Krallenelement 5, bzw. genau genommen der längere Teilabschnitt 5b desselben, anschlägt, wenn dieses durch Rotieren der Schraube 4 in der umgekehrten Drehrichtung in der Öffnungsrichtung 14 vom flanschartigen Gehäuseabschnitt 6b weg bewegt wird. Der erste und zweite seitliche Anschlag 12a und 12b erstrecken sich dabei in axialer Richtung des ersten Gehäuseabschnitts 6a. Die Öffnungsrichtung 14 und Schließrichtung 15 sind in Fig. 5 durch die jeweiligen Pfeile angedeutet.

Wie in Fig. 3 gezeigt ist, besitzt der zweite seitliche Anschlag 12b an seinem dem flanschartigen Gehäuseabschnitt 6b gegenüberliegenden Ende eine Ausnehmung 13a, in die der längere Teilabschnitt 5b des Krallenelements 5 hinein schwenkt, sobald das Krallenelement 5 durch Rotieren der Schraube 4 in der zweiten Drehrichtung seine Einführposition erreicht. In der Ausnehmung 13a ist ein radialer Anschlag 11 geformt, an dem der längere Teilabschnitt 5b des Krallenelements 5 in der Einführposition anliegt und der ein Weiterdrehen des Krallenelements 5 verhindert.

Oberhalb der Ausnehmung 13a, d.h. auf der dem flanschartigen Gehäuseabschnitt 6b gegenüberliegenden Seite des ersten Gehäuseabschnitts 6a, ist weiterhin ein oberer axialer Anschlag 10 geformt, der bei einer Weiterdrehung der Schraube 4 die axiale Weiterbewegung des Krallenelements 5 begrenzt. Durch Beaufschlagen der Schraube 4 mit einem geringen Drehmoment in der zweiten Drehrichtung (entgegen dem Uhrzeigersinn) kann das Krallenelement 5 gegenüber dem oberen axialen Anschlag verspannt werden, um ein zufälliges Herausschwenken des Krallenelements 5 während des Einführens und Herausziehens des ersten Gehäuseabschnittes in die Öffnung zu verhindern.

Wie den Darstellungen weiterhin entnommen werden kann, sind bevorzugt insgesamt zwei Krallenelemente 5 diametral gegenüberliegend am ersten Gehäuseabschnitt 6a vorgesehen, die über entsprechende Schrauben 4 unabhängig voneinander betätigt werden können.

Nachfolgend wird noch einmal die Arbeitsweise des erfindungsgemäßen Installationsgerätes bei der Montage und Demontage beschrieben.

Sobald die Schraube 4 mit einem Drehmoment im Uhrzeigersinn beaufschlagt wird, bewegt sich das Krallenelemente 5 vom radialen Anschlag 11 in Richtung zum ersten seitlichen Anschlag 12a. Mit Hilfe des ersten seitlichen Anschlages 12a wird es ermöglicht, dass sich das Krallenelement 5 nicht zu weit dreht und axial in Schließrichtung 15 bewegt, solange die Schraube 4 weiterhin im Uhrzeigersinn gedreht wird. Somit wird das Krallenelement 5 zwangsläufig in Richtung der Decke 9 bewegt.

Nachdem das Krallenelement die Decke 9 erreicht hat, kann dieses durch Anziehen der Schraube 4 mit einer entsprechenden Klemmkraft beaufschlagt werden, welche den zweiten flanschartigen Gehäuseabschnitt 6b entgegen einer externen Krafteinwirkung, die durch nicht näher gezeigte Kabel auf das Gehäuse 6 ausgeübt wird, in eine bündige Anlage mit der Unterseite der Decke 9 bringt.

Aufgrund des gleichzeitigen Einsatzes von federbelasteten Spreizarmen 7 und Krallenelementen 5 ist es dem Installateur hierbei möglich, das erfindungsgemäße Installationsgerät zuerst vorzumontieren und ggf. die Wirkung der federbelasteten Spreizarme 7 durch die Krallenelemente 5 zu unterstützten, damit das Installationsgerät optimal an der Decke 9 befestigt wird.

Bei der Demontage muss der Installateur die Schrauben 4 entgegen dem Uhrzeigersinn drehen. Aufgrund des zweiten seitlichen Anschlages 12b werden die Krallenelemente 5 an einer umfänglichen Drehung im Uhrzeigersinn (zweite Drehrichtung) gehindert und drehen sich nicht weiter, sondern bewegen sich in axialer Richtung entlang des zweiten seitlichen Anschlags 12b in Öffnungsrichtung 15, solange die Schrauben 4 weiterhin gegen den Uhrzeigersinn gedreht werden.

Sobald das Krallenelement 5 die Schräge 13 erreicht hat, bewegt sich dieses vom zweiten seitlichen Anschlag 12b weg und taucht vollständig in die Ausnehmung 13a ein. In dieser Einführposition zieht sich das Krallenelement 5 beim Weiterdrehen der Schraube 4 durch den axialen oberen Anschlag 10 fest und kann bei der Demontage nicht verloren gehen. Nachdem das Krallenelement 5 in der Einführposition wieder am Installationsgerät anliegt kann der Installateur das Installationsgerät aus der Decke 9 herausziehen.

### Bezugszeichenliste

- 1: Designelement
- 2: Befestigungselement / Blendrahmen für
- 3: Abdeckkappe/Linse
- 4: Schraube
- 5: Krallenelement
- 5a: exzentrische Gewindebohrung
- 5b: längerer Teilabschnitt
- 5c: kürzerer Teilabschnitt
- 6: Gehäuse
- 6a: In die Öffnung einschiebbarer Gehäuseabschnitt
- 6b: flanschartiger Gehäuseabschnitt
- 7: Federbelastete Spreizarme
- 8: Zugentlastung
- 9: Decke
- 10: Oberer Anschlag
- 11: Radialer Anschlag
- 12a: Erster seitlicher Anschlag
- 12b: Zweiter seitlicher Anschlag
- 13: Schräge
- 13a: Ausnehmung
- 14: Öffnungsrichtung
- 15: Schließrichtung
- 16: Loch / Öffnung in Decke
- 17: Innenraum der Decke
- 18: Außenraum der Decke

## Patentansprüche

1. Als Bewegungsmelder oder Rauchmelder ausgeführtes Installationsgerät zur Montage in einer Öffnung (16) einer aus plattenförmigem Werkstoff gebildeten Decke (9) eines Gebäudes, mit einem Gehäuse (6), welches einen in die Öffnung (16) einschiebbaren Gehäuseabschnitt (6a) und einen zweiten, außerhalb der Öffnung (16) angeordneten flanschartigen Gehäuseabschnitt (6b) aufweist, welcher einen größeren Durchmesser als die Öffnung (16) besitzt und welcher nach dem Einschieben bündig mit der Unterseite der Decke (6) in Anlage bringbar ist, sowie mit im Bereich des ersten Gehäuseabschnitts (6a) angeordneten federbelasteten Spreizarmen (7), die durch federelastische Mittel aus einer radial innenliegenden Einführposition in eine radial erweiterte Spreizposition gedrängt werden,
wobei am ersten Gehäuseabschnitt (6a) ein Krallenelement (5) mit einer in diesem geformten exzentrischen Gewindebohrung (5a) angeordnet ist, welches durch Rotieren einer in die Gewindebohrung (5a) eingreifenden Schraube (4) in einer ersten Drehrichtung in axialer Richtung auf den flanschartigen Gehäuseabschnitt (6b) zu aus einer Einführposition in eine Klemmposition bewegbar ist und auf den zweiten flanschartigen Gehäuseabschnitt (6b) nacheinander eine als Linse oder Streuscheibe ausgestaltete, den Innenraum des Gehäuses (6) abdeckende Abdeckkappe, ein auf diese aufgesetztes Befestigungselement (2) in Form eines umlaufenden Rahmens aufgesetzt sind.

2. Installationsgerät nach Anspruch 1, **dadurch gekennzeichnet, dass** am ersten Gehäuseabschnitt (6a) ein erster seitlicher Anschlag (12a) geformt ist, an welchem das Krallenelement (5) anschlägt, während dieses durch Rotieren der Schraube (4) in der ersten Drehrichtung auf den flanschartigen Gehäuseabschnitt (6b) zu bewegt wird.

3. Installationsgerät nach Anspruch 1 oder 2, **dadurch gekennzeichnet, dass** am ersten Gehäuseabschnitt (6a) ein zweiter seitlicher Anschlag (12b) geformt ist, an welchem das Krallenelement (5) anschlägt, während dieses durch Rotieren der Schraube (4) in einer zweiten Drehrichtung vom flanschartigen Gehäuseabschnitt (6b) weg bewegt wird.

4. Installationsgerät nach Anspruch 3, **dadurch gekennzeichnet, dass** der zweite Anschlag (12b) an seinem dem flanschartigen Gehäuseabschnitt (6b) gegenüberliegenden Ende eine Ausnehmung (13a) aufweist, in welche das Krallenelement (5) einschwenkbar ist, wenn dieses durch Rotieren der Schraube (4) in der zweiten Drehrichtung seine Einführposition erreicht.

5. Installationsgerät nach Anspruch 4, **dadurch gekennzeichnet, dass** in der Ausnehmung (13a) ein radialer Anschlag (11) geformt ist, welcher beim Drehen der Schraube (4) in der zweiten Drehrichtung eine Weiterdrehung des Krallenelements (5) verhindert, wenn dieses vollständig in die Ausnehmung (13a) eingeschwenkt ist.

6. Installationsgerät nach Anspruch 4 oder 5, **dadurch gekennzeichnet, dass** der zweite Anschlag (12b) eine im Bereich der Ausnehmung (13a) entspringende Schräge (13) aufweist, entlang welcher sich das Krallenelement (5) nach dem Verlassen der Einführposition entlang bewegt, wenn die Schraube in der ersten Drehrichtung rotiert wird.

7. Installationsgerät nach einem der vorhergehenden Ansprüche, **dadurch gekennzeichnet, dass** die axiale Bewegung des Krallenelements (5) in der Einführposition durch einen oberen Anschlag (10) begrenzt wird.

8. Installationsgerät nach einem der vorhergehenden Ansprüche, **dadurch gekennzeichnet, dass** das Krallenelement (5) eine, bevorzugt flügelartige, insbesondere langgestreckte rechteckige oder ovale Form besitzt, und dass die exzentrische Gewindebohrung in der Weise im Krallenelement (5) angeordnet ist, dass dieses einen längeren Teilabschnitt, welcher in der Klemmposition an der Rückseite der Decke (9) anliegt und einen kürzeren Teilabschnitt umfasst, welcher sich in der Einführposition radial innerhalb des Durchmessers der Öffnung (16) befindet.

9. Installationsgerät nach einem der vorhergehenden Ansprüche, **dadurch gekennzeichnet, dass** am ersten Gehäuseabschnitt (6a) ein weiteres, spiegelbildlich zum ersten Krallenelement (5) ausgebildetes Krallenelement (5) mit einer in diesem geformten exzentrischen Gewindebohrung (5a) angeordnet ist, welches durch Rotieren einer in die Gewindebohrung (5a) eingreifenden weiteren Schraube (4) in einer ersten Drehrichtung in axialer Richtung aus einer Einführposition auf den flanschartigen Gehäuseabschnitt (6b) zu in eine Klemmposition bewegbar ist, wobei sich die Schraube (4) und die weitere Schraube (4) parallel zueinander in einer durch das Zentrum des ersten Gehäuseabschnitts (6a) verlaufenden gedachten Verbindungsebene erstrecken und die Krallenelemente (5) in der Einführposition auf einander gegenüberliegenden Seiten der gedachten Verbindungsebene spiegelbildlich versetzt zueinander angeordnet sind.

10. Installationsgerät nach einem der vorhergehenden Ansprüche, **dadurch gekennzeichnet, dass** das freie Ende der Schraube (4) durch Sicherungsmittel, wie beispielsweise eine aufgepresste Scheibe, in axialer Richtung die Schraube (4) fixieren und dadurch ein Herausschieben derselben verhindern.

## Claims

1. Installation device, which is configured as a motion sensor or smoke detector, for mounting in an opening (16) in a ceiling (9), which is formed of material in panel form, of a building, with a housing (6), which has a housing portion (6a) which can be inserted into the opening (16) and which has a second, flange-like housing portion (6b) which is arranged outside of the opening (16) and which has a larger diameter than the opening (16) and which, after insertion, can be brought into flush contact with the underside of the ceiling (6), and also with spring-loaded spreading arms (7) which are arranged in the region of the first housing portion (6a) and which are urged by spring-elastic means from a radially inner insertion position into a radially expanded spreading position, wherein the first housing portion (6a) has arranged thereon a claw element (5) which has an eccentric threaded bore (5a) formed therein and which, by rotating a screw (4) engaging in the threaded bore (5a), is movable in a first direction of rotation in the axial direction towards the flange-like housing portion (6b) from an insertion position into a clamping position, and the second flange-like housing portion (6b) has placed thereon, in succession, a covering cap, which is designed as a lens or diffuser disc and which covers the interior of the housing (6), and a fastening element (2) which is placed on said covering cap and takes the form of a peripheral frame.

2. Installation device according to Claim 1, **characterized in that** the first housing portion (6a) has a first lateral stop (12a) formed thereon against which the claw element (5) abuts, while the latter is moved towards the flange-like housing portion (6b) by rotating the screw (4) in the first direction of rotation.

3. Installation device according to Claim 1 or 2, **characterized in that** the first housing portion (6a) has a second lateral stop (12b) formed thereon against which the claw element (5) abuts, while the latter is moved away from the flange-like housing portion (6b) by rotating the screw (4) in a second direction of rotation.

4. Installation device according to Claim 3, **characterized in that** the second stop (12b) has, at its end opposite the flange-like housing portion (6b), a cutout (13a) into which the claw element (5) can be pivoted when the latter reaches its insertion position by rotating the screw (4) in the second direction of rotation.

5. Installation device according to Claim 4, **characterized in that** the cutout (13a) has a radial stop (11) formed therein which, upon rotating the screw (4) in the second direction of rotation, prevents further rotation of the claw element (5) when the latter is completely pivoted into the cutout (13a).

6. Installation device according to Claim 4 or 5, **characterized in that** the second stop (12b) has a bevel (13) which originates in the region of the cutout (13a) and along which the claw element (5) moves after leaving the insertion position when the screw is rotated in the first direction of rotation.

7. Installation device according to one of the preceding claims, **characterized in that** the axial movement of the claw element (5) is limited in the insertion position by an upper stop (10).

8. Installation device according to one of the preceding claims, **characterized in that** the claw element (5) has a, preferably wing-like, in particular elongate rectangular or oval shape, and **in that** the eccentric threaded bore is arranged in the claw element (5) in such a way that the latter comprises a relatively long sub-portion, which bears against the rear side of the ceiling (9) in the clamping position, and a relatively short sub-portion, which is situated radially within the diameter of the opening (16) in the insertion position.

9. Installation device according to one of the preceding claims, **characterized in that** the first housing portion (6a) has arranged thereon a further claw element (5), which is formed in mirror-image fashion to the first claw element (5), has an eccentric threaded bore (5a) formed therein and, by rotating a further screw (4) engaging in the threaded bore (5a), is movable in a first direction of rotation in the axial direction from an insertion position towards the flange-like housing portion (6b) into a clamping position, wherein the screw (4) and the further screw (4) extend parallel to one another in an imaginary connection plane running through the centre of the first housing portion (6a), and the claw elements (5), in the insertion position, are arranged offset from one another in mirror-image fashion on mutually opposite sides of the imaginary connection plane.

10. Installation device according to one of the preceding claims, **characterized in that** the free end of the screw (4), by way of securing means, such as, for example, a pressed-on disc, fix the screw (4) in the axial direction and thus prevent the latter from sliding out.

## Revendications

1. Appareil d'installation réalisé en tant que détecteur de mouvement ou détecteur de fumée, destiné à être monté dans une ouverture (16) d'un plafond (9), formé en un matériau en forme de plaque, d'un bâtiment, muni d'un boîtier (6), qui comprend une section de boîtier (6a) pouvant être insérée dans l'ouverture (16) et une deuxième section de boîtier (6b), en forme de bride, agencée à l'extérieur de l'ouverture (16), qui présente un plus grand diamètre que l'ouverture (16) et qui peut être amenée, après l'insertion, en appui en affleurement contre le côté inférieur du plafond (6), et muni de bras d'écartement (7) sollicités par ressort agencés dans la zone de la première section de boîtier (6a), qui sont poussés par des moyens élastiques à partir d'une position d'introduction radialement intérieure dans une position d'écartement radialement élargie,
un élément à crampon (5) dans lequel est formé un alésage fileté excentrique (5a) étant agencé sur la première section de boîtier (6a), qui peut être déplacé, par rotation d'une vis (4) en prise dans l'alésage fileté (5a) dans une première direction de rotation, dans la direction axiale sur la section de boîtier (6b) en forme de bride à partir d'une position d'introduction dans une position de serrage, et un cache de recouvrement recouvrant l'espace intérieur du boîtier (6), configuré en tant que lentille ou disque diffuseur, un élément de fixation (2) placé sur celui-ci sous la forme d'un cadre circonférentiel étant placés successivement sur la deuxième section de boîtier (6b) en forme de bride.

2. Appareil d'installation selon la revendication 1, **caractérisé en ce qu'**une première butée latérale (12a) est formée sur la première section de boîtier (6a), sur laquelle l'élément à crampon (5) bute pendant que celui-ci est déplacé par rotation de la vis (4) dans la première direction de rotation sur la section de boîtier (6b) en forme de bride.

3. Appareil d'installation selon la revendication 1 ou 2, **caractérisé en ce qu'**une deuxième butée latérale (12b) est formée sur la première section de boîtier (6a), sur laquelle l'élément à crampon (5) bute pendant que celui-ci est déplacé par rotation de la vis (4) dans une deuxième direction de rotation en partant de la section de boîtier (6b) en forme de bride.

4. Appareil d'installation selon la revendication 3, **caractérisé en ce que** la deuxième butée (12b) comprend, à son extrémité opposée à la section de boîtier (6b) en forme de bride, un évidement (13a), dans lequel l'élément à crampon (5) peut rentrer par pivotement lorsque celui-ci atteint sa position d'introduction par rotation de la vis (4) dans la deuxième direction de rotation.

5. Appareil d'installation selon la revendication 4, **caractérisé en ce qu'**une butée radiale (11) est formée dans l'évidement (13a), qui empêche une rotation supplémentaire de l'élément à crampon (5) lors de la rotation de la vis (4) dans la deuxième direction de rotation, lorsque celui-ci est entièrement rentré par pivotement dans l'évidement (13a).

6. Appareil d'installation selon la revendication 4 ou 5, **caractérisé en ce que** la deuxième butée (12b) comprend un biais (13) qui a son origine dans la zone de l'évidement (13a), le long duquel l'élément à crampon (5) se déplace après avoir quitté la position d'introduction lorsque la vis est tournée dans la première direction de rotation.

7. Appareil d'installation selon l'une quelconque des revendications précédentes, **caractérisé en ce que** le déplacement axial de l'élément à crampon (5) dans la position d'introduction est limité par une butée supérieure (10).

8. Appareil d'installation selon l'une quelconque des revendications précédentes, **caractérisé en ce que** l'élément à crampon (5) présente une forme rectangulaire ou ovale, notamment allongée, de préférence en forme de battant, et **en ce que** l'alésage fileté excentrique est agencé dans l'élément à crampon (5) de telle sorte que celui-ci comprenne une section partielle plus longue, qui s'appuie contre le côté arrière du plafond (9) dans la position de serrage, et une section partielle plus courte, qui se trouve radialement à l'intérieur du diamètre de l'ouverture (16) dans la position d'introduction.

9. Appareil d'installation selon l'une quelconque des revendications précédentes, **caractérisé en ce qu'**un élément à crampon (5) supplémentaire, configuré symétriquement au premier élément à crampon (5), dans lequel est formé un alésage fileté excentrique (5a), est agencé sur la première section de boîtier (6a), qui qui peut être déplacé, par rotation d'une vis supplémentaire (4) en prise dans l'alésage fileté (5a) dans une première direction de rotation, dans la direction axiale à partir d'une position d'introduction sur la section de boîtier (6b) en forme de bride dans une position de serrage, la vis (4) et la vis supplémentaire (4) s'étendant en parallèle l'une de l'autre dans un plan de liaison imaginaire passant par le centre de la première section de boîtier (6a), et les éléments à crampon (5) étant agencés symétriquement en décalage l'un de l'autre dans la position d'introduction sur des côtés opposés du plan de liaison imaginaire.

10. Appareil d'installation selon l'une quelconque des revendications précédentes, **caractérisé en ce que** l'extrémité libre de la vis (4) par des moyens de sécurisation, tels que par exemple un disque engagé par pression, fixent la vis (4) dans la direction axiale et empêche ainsi une sortie de celle-ci.
